# EUROPÄISCHE PATENTSCHRIFT

(11) **EP 1 233 571 B1**
(45) Veröffentlichungstag und Bekanntmachung des Hinweises auf die Patenterteilung: **23.08.2006**
(21) Anmeldenummer: 02002858.5
(22) Anmeldetag: 08.02.2002
(51) Int. Cl.: H04L 9/32, H04K 1/00

(54) **Verfahren zur Zuordnung von digitalen Zeitstempeln**
Method for allocating digital time stamps
Methode pour l'assignation des horodateurs numériques

(30) Priorität: 08.02.2001 DE 10106083
(43) Veröffentlichungstag der Anmeldung: 21.08.2002
(73) Patentinhaber: Wendenburg, Jan, 44797 Bochum (DE)
(72) Erfinder: Wendenburg, Jan, 44797 Bochum (DE); Dahm, Percy, 44755 Castrop-Rauxel (DE)
(74) Vertreter: Stute, Ivo Peter

(56) Entgegenhaltungen:
- WO-A-92/03000
- US-A- 5 946 396
- HABER S ET AL: "HOW TO TIME-STAMP A DIGITAL DOCUMENT" 30. Dezember 1991 (1991-12-30) , ADVANCES IN CRYPTOLOGY - PROCEEDINGS OF CRYPTO. SANTA BARBARA, AUG. 11 - 15, 1990, BERLIN, SPRINGER VERLAG, DE, VOL. CONF. 10, PAGE(S) 437-455 , USA XP000260024 * Seite 440 - Seite 444 * * Seite 452 *
- BULDAS A ET AL: "TIME-STAMPING WITH BINARY LINKING SCHEMES" 23. August 1998 (1998-08-23) , ADVANCES IN CRYPTOLOGY. CRYPTO '98. 18TH ANNUAL INTERNATIONAL CRYPTOLOGY CONFERENCE. SANTA BARBARA, AUG. 23 - 27, 1998. PROCEEDINGS, LECTURE NOTES IN COMPUTER SCIENCE;VOL. 1462, BERLIN: SPRINGER, DE, PAGE(S) 486-501 , ESTONIA XP000792183 ISBN: 3-540-64892-5 * Seite 488, Absatz 2.2 *

## Beschreibung

Die Erfindung betrifft ein Verfahren zum Verknüpfen von elektronischen bzw. digitalen Daten mit einem Zeitstempel, bei dem ein Daten-/Zeitstempelpaket erzeugt wird, das einen ersten, die zu stempelnden Daten identifizierenden Prüfzifferncode sowie Zeitstempeldaten umfaßt.

Die heutige Datentechnik ermöglicht es, weitestgehend alle Informationen, die früher auf Papier festgehalten worden sind, elektronisch zusammenzustellen, zu versenden und zu archivieren. Dies macht man sich zu nutze, um beispielsweise im Geschäftsverkehr Dokumente per e-Mail auszutauschen oder Produkte oder Dienstleistungen über das Internet zu bestellen. So werden immer häufiger geschäftliche und auch private Aktivitäten elektronisch abgewickelt.

Allerdings besteht bei der elektronischen Abwicklung von Geschäften das Problem, daß die elektronischen Daten leicht manipulierbar sind. Daher haben die elektronischen Daten in der Regel einen geringen Beweischarakter, beispielsweise wenn es bei einem elektronisch übermittelten, umstrittenen Auftrag darum geht, wann und in welchem Umfang der Auftrag erteilt worden ist. Grundsätzlich sind daher verläßliche Nachweise notwendig, um Sicherheit über die Gültigkeit von elektronischen Daten wie beispielsweise von vertragsrelevanten e-Mails, einem Kauf über das Internet oder beim Online-Banking zu bekommen.

Ein ähnliches Problem besteht bei der papierlosen Archivierung von Dokumenten in elektronischer Form. So können beispielsweise die Buchhaltungsdaten eines Unternehmens im nachhinein elektronisch in betrügerischer Weise manipuliert werden mit dem Ergebnis, daß, sofern nicht die gleichen Daten in ausgedruckter Form archiviert worden sind, sich die tatsächlichen Buchungsvorgänge nicht mehr nachvollziehen lassen und somit möglicherweise Finanzmittel des Unternehmens unterschlagen werden.

Es gibt verschiedene Zeitsignatursysteme, mit denen ein Nachweis darüber erbracht werden kann, daß ein bestimmter Datensatz zu einem bestimmten Zeitpunkt existiert hat, und ob dieser Datensatz auf elektronischem Weg an einen Dritten versandt worden ist. Dabei wird ein Datensatz mit einer Zeitangabe versehen, indem ein für den Datensatz eindeutiger Prüfzifferncode mit einer Zeitangabe verknüpft, zu der Kombination aus Prüfzifferncode und Zeitangabe ein Signaturcode erzeugt wird und der Signaturcode zu einem Signaturschlüssel kodiert wird. Die Kodierung erfolgt mit einem Verschlüsselungsverfahren, bei dem der Signaturcode mit einem privaten Schlüssel kodiert wird und mit einem korrespondierenden öffentlichen Schlüssel dekodiert werden kann. Der Signaturschlüssel wird mit dem Prüfzifferncode und der Zeitangabe verknüpft und bildet ein Daten-/Zeitstempelpaket, daß zusammen mit einer Kopie des Datensatzes archiviert wird.

Unter Prüfzifferncode und Signaturcode werden hier und im folgenden Daten verstanden, die gemäß einem bestimmten Algorithmus aus einem Datensatz oder einer Datei erzeugt werden und diesen eindeutig identifizieren. Sie sind in der Regel gegenüber den Datensätzen vergleichsweise klein sind und haben eine einheitliche Länge, beispielsweise eine Länge von n Bits. Ein Datenverarbeitungsprogramm kann aufgrund der geringeren und einheitlichen Größe mit solch einem Code, unter anderem auch als Hash-Code bekannt, einfacher und schneller arbeiten als mit der gesamten Datei bzw. dem gesamten Datensatz.

Soll der Nachweis über die Gültigkeit des Datensatzes und der Zeit, zu dem dieser Datensatz "gestempelt", also mit einer Zeitangabe verknüpft worden ist, erbracht werden, wird der Signaturschlüssel des Daten-/Zeitstempelpakets mit dem öffentlichen Schlüssel dekodiert. Der auf diese Weise dekodierte Signaturcode wird mit einem neu zu berechnenden Signaturcode verglichen, wobei sich der neu zu berechnende Signaturcode aus einem dem Datensatz zugehörigen Prüfzifferncode und der im Daten-Zeitstempelpaket enthaltenen Zeitangabe ergibt. Stimmen der neu berechnete und der dekodierte Signaturcode überein, ist der Nachweis erbracht, daß der Datensatz in der abgelegten Form zum Zeitpunkt des Zeitstempels bereits bestanden hat. Der Signaturschlüssel ist derart kodiert, daß es unmöglich oder zumindest nahezu unmöglich ist, ihn ohne den notwendigen öffentlichen Schlüssel zu öffnen, so daß er nicht manipuliert werden kann. Sollte das Daten-/Zeitstempelpaket, das den kodiertem Signaturschlüssel enthält, verändert werden, läßt sich der ursprüngliche Signaturcode nicht mehr reproduzieren, so daß die Manipulation offensichtlich wird. Somit wird die Zeitsignatur in ihrer Gesamtheit unbrauchbar und ungültig. Eine Fälschung der signierten Daten ist somit ausgeschlossen.

Damit diese Art der Zeitsignierung eine offizielle Gültigkeit hat, gibt es nach deutschem Recht gemäß dem Zeitstempelgesetz besondere Anforderungen an die Zuverlässigkeit und Manipulationssicherheit von Hard- und Software und deren Umgebung. Erfüllt ein Zeitsignatursystem zur Zeitsignierung diese Anforderungen, besteht die Möglichkeit, nach Abnahme durch den TÜV-IT (Technischer Überwachungsverein Bereich IT) ein offizielles Zeitsignierzertifikat zu erhalten. Ein diese Anforderungen augenscheinlich erfüllendes Signatursystem ist in EP 0 848 872 B1 beschrieben.

Grundsätzlich ist es für ein Unternehmen möglich, ein solches Zeitsignatursystem selbst, beispielsweise innerhalb eines eigenen Netzwerkes, zu betreiben und die untemehmenseigenen oder auch die eingehenden elektronischen Daten hierdurch zeitstempeln zu lassen. Es besteht aber auch die Möglichkeit, die Daten über ein öffentliches Datennetz wie beispielsweise dem Internet an einen Dienstleistungsanbieter zu versenden, der diese Daten dann mit einem Zeitstempel versehen wieder zurück sendet.

Ein Nachteil solcher Zeitsignatursysteme besteht darin, dass sie aufwendig und damit teuer sind, und gleichzeitig ihre Kapazität zur Vergabe von Zeitstempeln für einzelne Datensätze aufgrund der Rechnerleistung begrenzt ist. Will ein Unternehmen seine sämtlichen elektronischen Transaktionen über solche Zeitsigniersysteme protokollieren, ist dies aufgrund der begrenzten Stempelkapazität dieser Systeme kaum möglich und wirtschaftlich nicht zu vertreten.

Aus Haber S et al: "How to time-stamp a digital document", 30. Dezember 1991, Advances in Cryptology - Proceedings of Crypto. Santa Barbara, August 11 - 15, 1990, Berlin, Springer Verlag, DE, Vol. conf. 10, Page(s) 437-455, ist ein Verfahren bekannt, bei dem eine Protokolldatei, der eine Vielzahl von Hashwerten angehängt sind, zum Zeitstempeln an einen Zeitstempelserver ("time stamping service") versandt wird. Ein Nachteil dieses Verfahrens besteht darin, dass die an den Zeitstempelserver gesandten Daten keine einheitliche Länge haben, so dass das erzeugte Daten-/Zeitstempelpaket vergleichsweise groß sein kann.

Des weiteren ist aus der US-A-5 946 396 ein Verfahren bekannt, mit dem festgestellt werden können soll, innerhalb welcher zeitlichen Klammer bestimmte Video- und Audiodaten erzeugt worden sind. Sowohl zu den Video- als auch zu den Audiodaten wird ein als "aggregate digest" bezeichneter Prüfzifferncode erzeugt. Es wird vorgeschlagen, dass dieser Prüfzifferncode zur Bestimmung eines spätesten Zeitpunkts, vor dem die Video- und Audiodaten erzeugt worden sind, einem Zeitstempelverfahren zugeführt wird. Als Zeitstempelverfahren wird hier das Verfahren der Surety Technologies Inc., genannt. Bei diesem Verfahren wird für eine Vielzahl von Prüfzifferncodes jeweils paarweise ein übergeordneter Prüfzifferncode erstellt, wobei diese übergeordneten Prüfzifferncodes auch wieder paarweise in einem weiteren Prüfzifferncode zusammengefasst werden, und zwar baumartig so, dass am Ende ein für alle übergeordneten Prüfzifferncodes geltender "composite digest" erzeugt wird. Dieser composite digest wird in einer Vielzahl von Publikationen veröffentlicht, um bekannt zu machen, dass die mit diesem "composite digest" identifizierten Prüfzifferncodes zum Zeitpunkt der Veröffentlichung existiert haben. Um den Nachweis darüber zu führen, dass zu einem späteren Zeitpunkt ein bestimmter Datensatz dem zeitgestempelten Datensatz entspricht, müssen bestimmte Informationen beschafft werden, nämlich der veröffentlichte "composite digest", der "aggregate digest" sowie eine Vielzahl von übergeordneten Prüfzifferncodes, die zur Erzeugung des "composite digests" verwendet wurden, und schließlich der verwendete Hash-Algorithmus. Eine automatisierte Überprüfung der "Echtheit" von Daten ist mit diesem Verfahren nicht möglich.

Somit liegt der vorliegenden Erfindung die Aufgabe zugrunde, ein Verfahren der eingangs genannten Art derart weiterzuentwickeln, daß die Kapazität solcher Signiersysteme besser genutzt werden kann und es möglich wird, eine vergleichsweise wesentlich größere Anzahl von Datensätzen innerhalb eines bestimmten Zeitraums mit Zeitstempeln versehen zu können.

Diese Aufgabe wird mit einem Verfahren mit den Merkmalen des Anspruchs 1 gelöst.

Der Grundgedanke der Erfindung besteht darin, einen Prüfzifferncode mit einem Zeitstempel zu versehen, der nicht nur einen konkreten Datensatz identifiziert, sondern vielmehr eine Vielzahl von Prüfzifferncodes, die jeweils mindestens einen Datensatz identifizieren, so daß im Ergebnis ein Zeitstempel für eine Vielzahl von Datensätzen Gültigkeit hat. So kann ein zweiter Prüfzifferncode entweder einen oder mehrere Datensätze in ihrer Gesamtheit direkt identifizieren können, oder aber eine weitere Mehrzahl von Prüfzifferncodes, über die jeweils wieder ein oder mehrere Datensätze identifizierbar sind.

Soll verifiziert werden, daß ein bestimmter Datensatz zu einer bestimmten Zeit mit einem Zeitstempel versehen worden ist, wird zum einen überprüft, ob ein aus den dem Daten-/Zeitstempelpaket beigefügten zweiten Prüfzifferncodes erzeugter erster Prüfzifferncode mit dem im Daten-/Zeitstempelpaket enthaltenen ersten Prüfzifferncode übereinstimmt. Darüber hinaus wird aus dem Datensatz ein zweiter Prüfzifferncode erstellt und mit dem zweiten Prüfzifferncode, der dem Daten-/Zeitstempelpaket angehängt ist, verglichen. Stimmen beide überein, ist der Zeitstempel für den Datensatz gültig.

Entsprechendes gilt, wenn der zweite Prüfzifferncode nicht direkt den Datensatz identifiziert, sondern aus einem oder mehreren weiteren Prüfzifferncodes gebildet wurde. In diesem Fall wird man anhand aller zur Erzeugung eines der zweiten Prüfzifferncodes notwendigen weiteren Prüfzifferncodes, die ebenso dem Daten-/Zeitstempelpaket beigefügt sind, überprüfen, ob man aus diesen den entsprechenden zweiten Prüfzifferncode erzeugen kann. Außerdem wird man prüfen, ob ein aus dem Datensatz gebildeter Prüfzifferncode mit einem der weiteren Prüfzifferncodes identisch ist. Kann beides bejaht werden, ist der Zeitstempel für den entsprechenden Datensatz gültig.

Im Ergebnis wird also genau ein Zeitstempel für eine Vielzahl von Datensätzen vergeben, die alle über zweite oder weitere Prüfzifferncodes identifizierbar sind, sofern das Daten-/Zeitstempelpaket wieder mit allen zu seiner Erzeugung verwendeten Prüfzifferncodes sowie die zugehörigen Datensätze in Verbindung gebracht wird.

Die Kapazität eines derart betriebenen Zeitsignatursystems zur Zeitstempelsignierung ist damit um ein Vielfaches höher als bei der herkömmlichen vorbekannten Betriebsweise, bei dem ein Zeitstempel genau einem Datensatz zugeordnet wird. Unabhängig von einer möglichen Kodierung des Daten-/Zeitstempelpaketes zur Erhöhung seines Beweiswertes kann ein solches System zur Archivierung eigener elektronischer Daten verwendet werden.

In einer bevorzugten Ausführung des erfindungsgemäßen Verfahrens enthält das Daten-/Zeitstempelpaket einen mit einem privaten Schlüssel kodierte Signatur, wobei der Signaturcode die Kombination von erstem Prüfzifferncode und Zeitstempeldaten identifiziert. Wird eine Signatur verwendet, wie es regelmäßig in den eingangs beschriebenen Sicherheitsboxen geschieht, erhält das Daten-/Zeitstempelpaket einen hohen Beweiswert, da die Erzeugung der Signatur innerhalb der Sicherheitsbox gegen Manipulation von außen weitestgehend geschützt ist und eine Manipulation der Signatur aufgrund ihrer Kodierung ihre Zerstörung zufolge hätte. In diesem Fall könnte nicht mehr überprüft werden, ob sich aus dem ersten Prüfzifferncode und den Zeitstempeldaten ein Signaturcode berechnen läßt, der dem verschlüsselten Signaturcode entspricht.

Entsprechendes gilt, wenn gemäß einem weiteren bevorzugten Verfahren anstatt der Verwendung einer Signatur oder in Ergänzung zur Verwendung einer kodierten Signatur das gesamte Daten-/Zeitstempelpaket, wahlweise zusammen mit den angehängten zweiten Prüfzifferncodes, verschlüsselt wird. Zur Verschlüsselung kann beispielsweise ein bekanntes PGP-Verfahren verwendet werden.

Insbesondere bei Verwendung des erfindungsgemäßen Verfahrens zusammen mit Sicherheitsboxen besteht der Vorteil gegenüber in herkömmlicher Weise arbeitenden Sicherheitsboxen, daß für die Generierung der Prüfzifferncodes für einen bestimmten Datensatz nicht die Anforderungen an Zuverlässigkeit und Manipulierbarkeit bestehen, wie sie für die Zuordnung eines Zeitstempels zu einem Prüfzifferncode bestehen. Somit kann für die Generierung von Prüfzifferncodes aus Datensätzen und das Zusammenfassen mehrerer Prüfzifferncodes zu einem ersten ein vergleichsweise einfaches Rechnersystem verwendet werden.

In einer weiteren bevorzugten Ausgestaltung des Verfahrens ist vorgesehen, daß das Daten-/Zeitstempelpaket mit dem öffentlichen Schlüssel eines Zeitstempelempfängers kodiert ist und nur mit dessen persönlichen Schlüssel geöffnet werden kann. Auf diese Weise kann sichergestellt werden, daß nur der Zeitstempelempfänger das Daten-/Zeitstempelpaket auswerten kann.

Zur Realisierung eines auf die erfindungsgemäße Weise arbeitenden Zeitsignatursystems innerhalb eines Netzwerkes wird vorzugsweise zu jedem zu stempelnden Datensatz auf einem Hostrechner ein zweiter Prüfzifferncode berechnet und alle zweiten Prüfziffercodes an einen im Netzwerk befindlichen Zeitstempelserver versandt, auf dem das Daten-/Zeitstempelpaket erzeugt wird. Dabei kann der Zeitstempelserver eine Sicherheitsbox aufweisen, der eine Serversoftware vorgeschaltet ist, die die zweiten Prüfzifferncodes der zu signierenden Datensätze bzw. Dateien von einem Absender empfängt, diese zusammenfaßt und hierzu einen ersten Prüfzifferncode erzeugt und den ersten Prüfzifferncode der Sicherheitsbox zuführt. Das von der Sicherheitsbox ausgegebene Daten-/Zeitstempelpaket wird dann von der Serversoftware zusammen mit den zugehörigen zweiten Prüfzifferncodes an den Hostrechner zurückgesandt.

In einer anderen erfindungsgemäßen Betriebsweise wird der erste Prüfzifferncode bereits auf dem Hostrechner erzeugt und an den Zeitstempelserver verschickt. Die Zuordnung aller zweiten Prüfzifferncodes zum erzeugten Daten-/Zeitstempelpaket erfolgt dann auf dem Hostrechner, sobald er das entsprechende Daten-/Zeitstempelpaket vom Zeitstempelserver erhalten hat. Auf diese Weise entfallen auf dem Zeitstempelserver die Rechenschritte für das erzeugen des ersten Prüfzifferncodes und der Zuordnung der zweiten Prüfzifferncodes zum erzeugten Daten-/Zeitstempelpaket, die dezentral auf dem jeweiligen Hostrechner im Netzwerk durchgeführt werden, so daß die Rechnerlast besser verteilt ist. Insbesondere bei der Verwendung eines Zeitstempelservers mit Sicherheitsbox macht man sich dabei den Vorteil des erfindungsgemäßen Verfahrens zu nutze, daß an die Erzeugung der Prüfzifferncodes keine Sicherheitsanforderungen bestehen, anders als bei der Erzeugung des Zeitstempels.

Mit diesen oder vergleichbaren Verfahrensweisen läßt sich eine Sicherheitsbox über das Intranet eines Unternehmens oder auch über ein öffentliches Netzwerk wie dem Internet verwenden. Grundsätzlich ist es aber auch möglich, eine Sicherheitsbox selbst mit dem erfindungsgemäßen Verfahren zu betreiben, wenn die darin arbeitende Software entsprechend modifiziert wird.

Im Ergebnis läßt sich mit dem erfindungsgemäßen Verfahren nicht nur für einzelne, besonders wichtige elektronische Dateien mit hoher Beweiskraft nachweisen, daß sie zu einem bestimmten Zeitpunkt registriert und seitdem nicht verändert wurden, sondern es können alle auf elektronischem Weg abgewickelten betrieblichen Vorgänge in wirtschaftlich vertretbarer Weise über die Zeitsignatur beweisbar protokolliert werden. Dies gilt insbesondere für die elektronische Auftragsabwicklung beispielsweise bei Online-Shopping-Systemen, Online-Banking-Systemen, sowie für die Protokollierung des Empfangs und Versands von e-Mails und die Archivierung aller elektronischer Daten eines Unternehmens. Dabei spielt das Format der elektronischen Dateien, keine Rolle, es können Textdokumente, Audiodaten, Videodaten oder sonstige elektronische Daten mit einer Zeitsignatur versehen werden. Somit wird es möglich, sämtliche Daten eines Unternehmens fälschungssicher zu machen und das Unternehmen vor den unkalkulierbaren Folgen und Kosten durch Manipulation seiner digitalen Daten zu schützen.

Im folgenden wird die Erfindung anhand zweier Figuren näher erläutert.

Es zeigen
- Figur 1: ein Diagramm eines Netzwerkes mit einem zentralen Zeitstempelserver und einer zugehörigen Client-Anbindung, und
- Figur 2: ein Ablaufdiagramm zur Erzeugung eines Daten-/Zeitstempelpakets mit einem beispielhaften erfindungsgemäßen Verfahren.

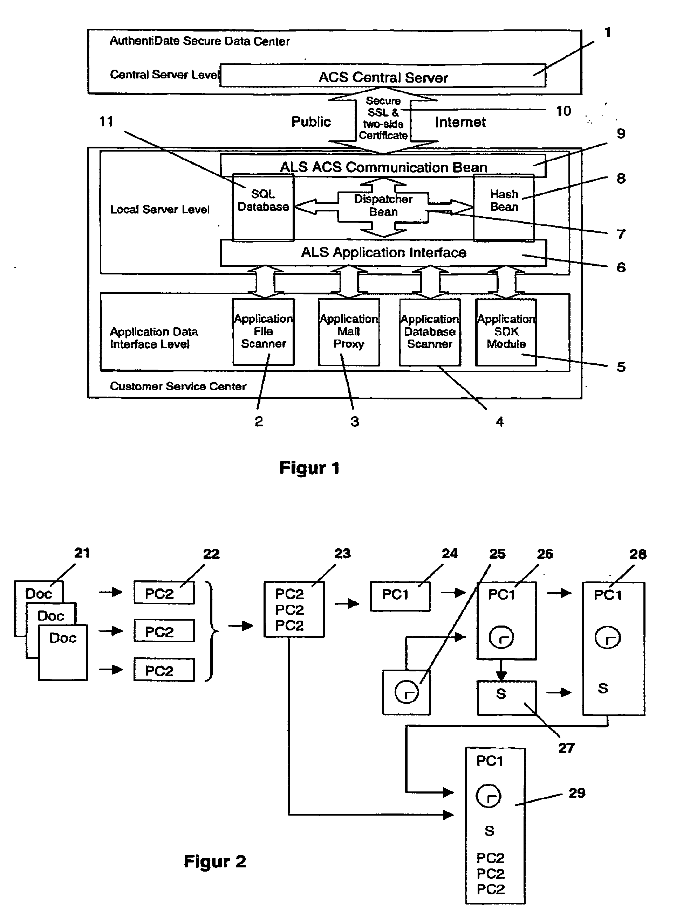

Das in Figur **1** dargestellte Diagramm eines beispielhaften Client-Server-System zeigt die Verbindung eines nach dem erfindungsgemäßen Verfahren arbeitenden Zeitstempelservers **1** mit dem Netzwerk eines Unternehmens dar. Die relevanten elektronischen Daten eines Unternehmens werden von vier Anwendungsschnittstellen erfaßt. Hierzu gehören ein mit einem oder mehreren Datenservern in Verbindung stehender Datei-Scanner **2**, ein mit einem oder mehreren e-Mail-Servern in Verbindung stehender e-Mail-Scanner **3,** ein Datenbank-Daten-Scanner **4** sowie ein Softwareentwicklungsdaten-Scanner **5.**

Die von diesen Scannern erfaßten Daten werden über eine Anwendungsschnittstelle **6** und eine Verteilerschnittstelle **7** einem Prüfzifferngenerator **8** zugeführt, der zu jedem Datensatz einen Prüfzifferncode erstellt. Die erzeugten Prüfzifferncodes werden dann über eine Verteilerschnittstelle **7** und eine Kommunikationsschnittstelle **9** über eine Internetverbindung **10** an den zentralen Zeitstempelserver **1** weitergeleitet. Dabei können die Prüfzifferncodes bereits im Prüfzifferngenerator **8** zusammengefaßt werden, wobei der Prüfzifferngenerator **8** hierzu dann einen ersten Prüfzifferncode erstellt, oder aber es wird jeder Prüfzifferncode an den zentralen Zeitstempelserver **1** gesandt, der dann selbst die Aufgaben des Zusammenfassens und der Generierung eines ersten Prüfzifferncodes übernimmt. Der zentrale Zeitstempelserver **1** erzeugt zum ersten Prüfzifferncode ein kodiertes Daten-/Zeitstempelpaket und sendet dieses gegebenenfalls zusammen mit den zugehörigen Prüfzifferncodes über die Internetverbindung **10** an das Unternehmen zurück, wobei die zurückgesandten Daten über die Kommunikationsschnittstelle **9** zur Verteilerschnittstelle **7** gelangen. Die Verteilerschnittstelle **7** sorgt dafür, daß die Daten-/Zeitstempelpakete zusammen mit den zugehörigen zweiten Prüfzifferncodes und den Datensätzen in einer hierfür bestimmten Archivierungsdatenbank **11** abgelegt werden.

In welchen Zeitabständen Datensätze auf diese Weise verarbeitet und mit einem Zeitstempel versehen werden, hängt im wesentlichen von den Protokollierungsanforderungen des Unternehmens ab. Während bei der elektronischen Abwicklung von Börsengeschäften ein minuten- oder gar sekundengenauer Zeitstempel und somit ein ununterbrochener Datenaustausch zwischen dem Zeitstempelserver und einem Unternehmen notwendig sein kann, reicht es bei einfacherer Auftragsabwicklung möglicherweise aus, daß alle Daten eines Tages gesammelt und zu einem bestimmten Zeitpunkt gemeinsam verarbeitet und mit einem Zeitstempel versehen werden.

Figur 2 zeigt schematisch die Aufbereitung des Daten-/Zeitstempelpakets. So wird aus einer Vielzahl von Datensätzen **21** eine entsprechende Anzahl von "zweiten" Prüfzifferncodes **22** erstellt. Diese Prüfzifferncodes **22** werden zu einem Datensatz **23** zusammengefaßt, zu dem ein neuer, "erster" Prüfzifferncode **24** erstellt wird. Dieser erste Prüfzifferncode **24** wird, beispielsweise in einer nicht dargestellten Sicherheitsbox, mit einem Zeitstempel **25**, also eine Zeitangabe enthaltende Daten, verbunden. Zu diesen miteinander verbundenen Daten **26** wird ein Signaturcode erzeugt, der zu einer Signatur **27** kodiert und gemeinsam mit den verbundenen Daten **26** zu einem Daten-/Zeitstempelpaket **28** verknüpft wird. Dem Daten-/Zeitstempelpaket **28** werden die "zweiten" Prüfzifferncodes angehängt, so daß sich ein Ausgabedatensatz **29** ergibt, mit dem zu einem späteren Zeitpunkt die korrekte Zuordnung des Daten-/Zeitstempelpakets zu den "zweiten" Prüfzifferncodes **22** nachweisbar ist.

## Patentansprüche

1. Verfahren zum Verknüpfen von elektronischen bzw. digitalen Daten mit einem Zeitstempel (25), bei dem ein Daten-/Zeitstempelpaket (28) erzeugt wird, das einen ersten, die zu stempelnden Daten identifizierenden Prüfzifferncode (24) sowie Zeitstempeldaten (25) umfaßt, **dadurch gekennzeichnet, daß** der erste Prüfzifferncode (24) eine Vielzahl von zweiten Prüfzifferncodes (22) identifiziert, wobei Jeder zweite Prüfzifferncode (22) mindestens einen zu stempelnden Datensatz (21) identifiziert, und wobei jeder der zweiten Prüfzifferncodes (22) dem Daten-/Zeitstempelpaket angehängt wird.

2. Verfahren nach Anspruch 1, **dadurch gekennzeichnet, daß** das Daten-/Zeitstempelpaket (28) einen mit einem privaten Schlüssel kodierten Signaturschlüssel (27) enthält, wobei der Signaturschlüssel (27) die Kombination von erstem Prüfzifferncode (24) und Zeitstempeldaten (25) identifiziert.

3. Verfahren nach Anspruch 1 oder 2, **dadurch gekennzeichnet, daß** das gesamte Daten-/Zeitstempelpaket (28), wahlweise zusammen mit den angehängten zweiten Prüfzifferncodes (22), verschlüsselt wird.

4. Verfahren nach einem der Ansprüche 1 bis 3, **dadurch gekennzeichnet, daß** das Daten-/Zeitstempelpaket (28) mit dem öffentlichen Schlüssel eines Zeitstempelempfängers kodiert ist und nur mit dessen persönlichen Schlüssel geöffnet werden kann.

5. Verfahren nach einem der Ansprüche 1 bis 4, **dadurch gekennzeichnet, daß** mindestens ein zu stempelnder Datensatz (21) auf einem Hostrechner eines Netzwerkes vorliegt, auf dem Hostrechner für jeden Datensatz (21) ein zweiter Prüfzifferncode (22) berechnet wird und alle zweiten Prüfziffern (22) an einen im Netzwerk befindlichen Zeitstempelserver (1) versandt werden, auf dem das Daten-/Zeitstempelpaket (28) erzeugt wird.

6. Verfahren nach einem der Ansprüche 1 bis 4, **dadurch gekennzeichnet, daß** mindestens ein zu stempelnder Datensatz (21) auf einem Hostrechner eines Netzwerkes vorliegt, auf dem Hostrechner für jeden Datensatz (21) ein zweiter Prüfzifferncode (22) berechnet wird und für alle zweiten Prüfziffern ein erster Prüfzifferncode (24) berechnet wird, und dieser erste Prüfzifferncode (24) an einen im Netzwerk befindlichen Zeitstempelserver (1) versandt wird, auf dem das Daten-/Zeitstempelpaket (28) erzeugt wird.

## Claims

1. A method for linking electronic or digital data to a time stamp (25) wherein a data/time stamp packet (28) is generated, comprising a first check digit code (24) which identifies the data to be stamped and time stamp data (25), **characterised in that** the first check digit code (24) identifies a plurality of second check digit codes (22) wherein each second check digit code (22) identifies at least one data set (21) to be stamped and wherein each of the second check digit codes (22) is appended to the data/time stamp packet.

2. The method according to claim 1, **characterised in that** the data/time stamp packet (28) contains a signature key (27) encoded with a private key, wherein the signature key (27) identifies the combination of first check digit codes (24) and time stamp data (25).

3. The method according to claim 1 or 2, **characterised in that** the entire data/time stamp packet (28), together with the appended second check digit code (22) if desired, is encrypted.

4. The method according to any one of claims 1 to 3, **characterised in that** the data/time stamp packet (28) is encoded with the public key of a time stamp receiver and can only be opened with this personal key.

5. The method according to any one of claims 1 to 4, **characterised in that** at least one data set (21) to be stamped is provided on a host computer of a network, a second check digit code (22) is calculated on the host computer for each data set (21) and all second check digits (22) are transmitted to a time stamp server (1) located in the network on which the data/time stamp packet (28) is generated.

6. The method according to any one of claims 1 to 4, **characterised in that** at least one data set (21) to be stamped is provided on a host computer of a network, a second check digit code (22) is calculated on the host computer for each data set (21) and a first check digit code (24) is calculated for all second check digits and this first check digit code (24) is transmitted to a time stamp server (1) located in the network on which the data/time stamp packet (28) is generated.

## Revendications

1. Procédé pour le chaînage de données électroniques ou numériques avec un chronotimbre (25) dans lequel est généré un paquet de données/ paquet de chronotimbrage (28) comprenant un premier code de chiffres de contrôle identifiant les données à timbrer, ainsi que des données de chronotimbrage (25), **caractérisé en ce que** le premier code de chiffres de contrôle (24) identifie une pluralité de deuxièmes codes chiffres de contrôle (22), chaque deuxième code chiffres de contrôle (22) identifiant au moins un jeu de données devant être timbré (21) et chacun des deuxièmes codes de chiffres de contrôle (22) étant attaché au paquet de données/paquet de chronotimbrage.

2. Procédé selon la revendication 1, **caractérisé en ce que** le paquet de données/paquet de chronotimbrage (28) contient une clé de signature (27) codée avec une clé privée, la clé de signature (27) identifiant la combinaison de premiers chiffres de contrôle (24) et de données de chronotimbrage (25).

3. Procédé selon la revendication 1 ou 2, **caractérisé en ce que** l'ensemble du paquet données/paquet de chronotimbrage (28) est crypté au choix en association avec les deuxièmes codes de chiffres de contrôle attachés (22).

4. Procédé selon l'une quelconque des revendications 1 à 3, **caractérisé en ce que** le paquet de données/paquet de chronotimbrage (28) est codé avec la clé publique d'un destinataire de chronotimbre et ne peut être ouvert qu'avec la clé personnelle de ce dernier.

5. Procédé selon l'une quelconque des revendications 1 à 4, **caractérisé en ce qu'**au moins un jeu de données à timbrer (21) est présent sur une ordinateur hôte d'un réseau, **en ce que** sur l'ordinateur hôte, un deuxième code de chiffres de contrôle (22) est calculé pour chaque jeu de données et **en ce que** tous les deuxièmes chiffres de contrôle (22) sont envoyés à un serveur de chronotimbrage (1) situé dans le réseau, sur lequel le paquet de données/paquet de chronotimbrage (28) est généré.

6. Procédé selon l'une quelconque des revendications 1 à 4, **caractérisé en ce que** au moins un jeu de données à timbrer (21) est présent sur un ordinateur hôte d'un réseau, **en ce que** sur l'ordinateur hôte, un deuxième code de chiffres de contrôle (22) est calculé pour chaque jeu de données (21) et en **en ce que** pour tous les deuxièmes chiffres de contrôle, un premier code de chiffres de contrôle (24) est calculé et **en ce que** ce premier code de chiffres de contrôle (24) est envoyé à un serveur de chronotimbrage (1) situé dans le réseau, sur lequel de paquet de données/paquet de chronotimbrage (28) est généré.
